# EUROPEAN PATENT APPLICATION

(11) **EP 2 712 725 A2**
(43) Date of publication of application: **02.04.2014**
(21) Application number: 13186698.0
(22) Date of filing: 30.09.2013
(51) Int. Cl.: B29D 12/02, G02C 5/00

(54) **Method for producing a spectacle frame and frame and glasses obtained by this method**

(30) Priority: 01.10.2012 IT MI20121635; 14.12.2012 IT MI20122136
(71) Applicant: Inventive S.r.l., 73100 Lecce (IT)
(72) Inventor: De Donno, Angela, I-73100 LECCE (IT); Tondo, Alessandro, I-73100 LECCE (IT)
(74) Representative: Crippa, Paolo Ernesto

(57) **Abstract**

A method for manufacturing an eyeglass frame (4), comprising the steps of:
providing (10) a structural layer (62) having seats (64) suitable to house respective lenses (70); applying (13) an aesthetical layer (60) on at least one portion of said structural layer (62); wherein said step of applying (13) comprises the steps of: providing (33) a shapeable material (61, 68) comprising cellulose fibers and a binder, which can be solidified after being shaped;
shaping (14) said shapeable material (61, 68) directly onto said structural layer (62) to form said aesthetical layer (60) until obtaining a preset tridimensional shape of said aesthetical layer; solidifying (15) said aesthetical layer (60) formed onto said structural layer (62). The present invention also relates to an eyeglass frame (4) obtained with the above-mentioned method.

## Description

The present invention relates to the field of eyeglasses manufacturing, and it particularly relates to a method for manufacturing a light-weight and eco-friendly eyeglass frame. The present invention further relates to an eyeglass frame obtained by such method.

Many types of eyeglass frames are known, and they aim to take care, besides to the aesthetic appearance, also requirements of light-weightiness and easiness of use.

Based on the materials that are used, they allow obtaining different thicknesses and configurations, for example, the celluloid frames, compared to the metal ones, have larger thicknesses, hence a more bulky appearance, while being undoubtedly more light-weight.

The known frames, while being produced in innumerable shapes, once they are designed and optimized, are suitable for large scale manufacturing, and they do not allow in any manner an artistic customization suitable to obtain unique pieces at a reduced cost.

Furthermore, the need is more and more felt, to use materials that are not only recyclable after disassembling them into components in different materials, but which are directly biodegradable at end of life, the disposal of which does not require expensive separation operations.

While the research is aimed to produce frames that are easily disassemblable in pieces of several materials recyclable separately, no eyeglass frames are known, which are completely biodegradable at end of life, and therefore which tend to self-decompose naturally under preset environmental conditions.

Furthermore, during everyday life, it would be agreeable to have pleasantly perfumed substances available, that are capable of providing to those ones that smell them, pleasant freshness and well-being sensations. This is possible only by releasing such perfumed substances into the environment where one is dwelling, but there is the drawback that such substances would be smelt by all those who are present in the same environment, thus risking to cause a disturbance.

Furthermore, some therapeutic treatments require the inhalation of some substances that may aid the treatment of some diseases. In this case, the user would need to bring a container for such substance and to inhale it when needed.

This may undoubtedly cause an embarrassing situation when one is together with other people, and the highest discretion is needed.

The known frames are not capable of integrating such substances in their structure and of releasing them gradually.

Therefore, the technical problem addressed by the present invention is to provide an eyeglass frame and a method for producing it that allows meeting the above-mentioned needs and at least partially obviating the drawbacks set forth above with reference to the prior art.

In particular, the object of the present invention is to provide an eyeglass frame and a method for producing it, which is able to give, to the artist who produces them, the highest degree of freedom to manufacture it in any shape and also in a single piece at a reduced cost.

Another important object of the present invention is to provide a method for manufacturing an eyeglass frame, and a frame, that is completely biodegradable under certain environmental conditions, and therefore that does not require an expensive subdivision into different components and expensive operation for retrieving the materials.

Therefore, it is an object of the invention to provide a method for manufacturing a frame that, even if it is scattered into the environment, it is able to degrade naturally without the intervention of particular disposal treatments.

Therefore, it is an object of the invention to provide a method for manufacturing a frame formed mainly or exclusively by natural components.

Another important object of the present invention is to provide a method for manufacturing an eyeglass frame, and a frame, which allows releasing a perfumed or therapeutic volatile substance only in the proximity of one's own nose, and therefore which is not invasive, neither aesthetically nor as regards the introduction of a substance in an environment inhabited also by other subjects.

According to an aspect of the invention, the above-mentioned objects and advantages are achieved by a method for manufacturing an eyeglass frame, by an eyeglass frame as set forth in the appended claims, and by eyeglasses comprising said frame, the definitions of which are an integral part of the present description.

Further characteristics and advantages of the present invention will be more clearly apparent from the description of some implementation examples, given herein below by way of non-limiting example, with reference to the following figures:

Fig. 1 schematically represents an implementation of a method for manufacturing eyeglasses according to the invention;

Fig. 1a shows an embodiment of a step of application of the aesthetical layer on at least one portion of said structural layer;

Fig. 1b shows an embodiment of the method for manufacturing an eyeglass frame;

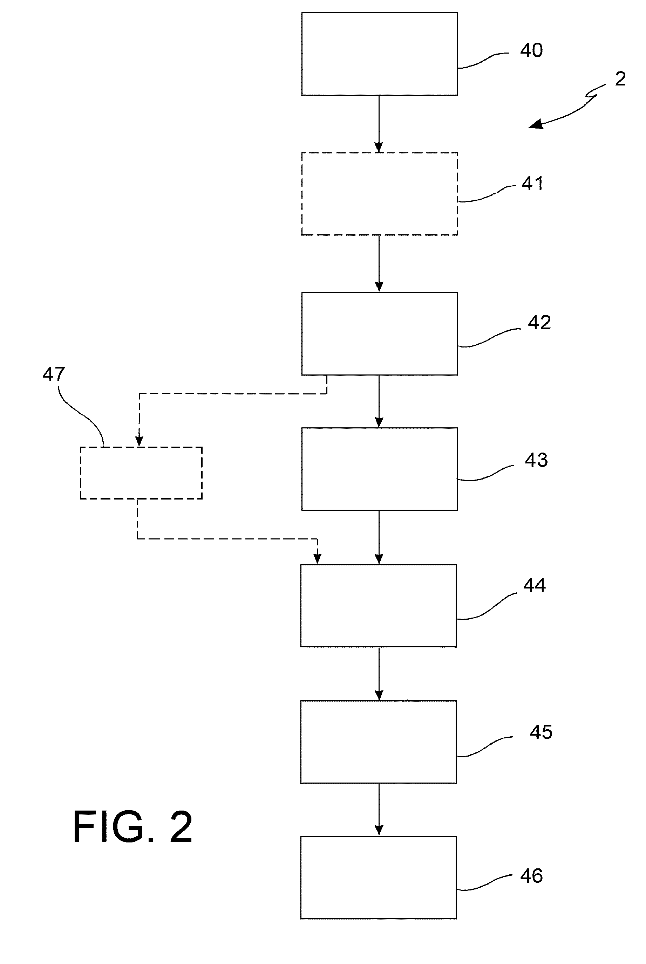

Fig. 2 schematically represents a method for manufacturing a paper fiber slurry for manufacturing eyeglasses according to the invention;

Fig. 3 shows schematically a method for obtaining a natural glue for manufacturing the eyeglasses according to the invention;

Fig. 4 shows in a perspective view an eyeglass frame according to the invention;

Figs. 5a and 5b show sectional views according to the plane V-V of two different embodiments of the above-mentioned eyeglasses;

Fig. 6 shows a sectional view with the plane V-V of another embodiment;

Fig. 6a shows a sectional view of a further embodiment of the frame;

Fig. 7 shows a partial perspective view of a frame according to the invention and according to a first embodiment;

Fig. 8 shows a partial perspective view of a frame according to another embodiment;

Fig. 9 shows a partial perspective view of a frame having coupling members for the aesthetical layer;

Fig. 10 shows a sectional view of a mould for implementing the method according to the invention for manufacturing eyeglasses and an eyeglass frame according to the invention;

Fig. 11 shows a sectional view of another mould for implementing the method and manufacturing an eyeglass frame according to the invention.

The eyeglass frame according to the invention, indicated generally with the number 4, comprises a support structural layer 62 having seats 64 for respective lenses 70, and an aesthetical layer 60 formed on at least one portion of the structural layer 62. The structural layer 62 has a support structural function, imparting to the frame 4 a mechanical strength and an elasticity that are suitable to the use thereof.

The support structural layer 62 preferably has two distinct seats 64, or alternatively it could have a number of seats 64 other than two, for example, a single seat 64.

The support structural layer 62 is defined by a rear surface 62' suitable to face a user and an opposite front surface 62". Furthermore, such support layer 62 has an outer side surface 62"' that joins said front surface and 62" and said rear surface 62', and that, for example, but not necessarily, externally surrounds the seats 64.

According to an embodiment, the support structural layer 62 comprises two annular portions 72 surrounding the seats 64. Such annular portions 72 can be separated or mutually connected by a bridge portion 73.

According to a possible embodiment, the annular portions 72 and the bridge portion 73 are manufactured as a single piece. Alternatively, the annular portions 72 and the bridge portion 73 are mutually separated and secured by coupling means.

Such coupling means can be of a non-detachable type, for example, obtained by glueing, or of a detachable type, for example by dovetail.

The support structural layer 62 is made of a biodegradable or biocompatible material, in other terms, the structural layer is made of a material that is capable of degrading naturally when exposed for a long period to atmospheric agents. For example, the support layer is obtained in a completely natural and nonpolluting material. For example, the structural layer is obtained with a porous and light-weight material.

According to a preferred embodiment, the structural layer 62 is made of wood, or of a wooden material, or of a vegetal fibrous material, or of plywood, or of suitably shaped rigid cardboard, or in another biodegradable material.

For example, the structural layer 62 is made of a material comprising wooden portions obtained by drying of a paddle of a plant belonging to the family of the *Cactaceae* plants, for example, of the genus *Opuntia.*

More in detail, the structural layer 62 may be obtained by removal of shaving from a piece of wood, or it may be obtained in agglomerated and compressed wood powder.

In an alternative embodiment, the structural layer 62 may be made of metal, for example of light metal allow, or of bone, or horn, or stone, for example, in pumice stone.

Alternatively, the structural layer 62 may be made of a polymeric material.

According to an embodiment, the aesthetical layer 60 has an aesthetical function, and it is formed and shaped onto the structural layer 62, until achieving a desired shape.

Therefore, the aesthetical layer 60, is obtained with a material that is originally shapeable, but which is capable of solidify after being shaped, or which solidifies when dried.

In other terms, the aesthetical layer 60 is obtained with a material 61, 68 that is easily malleable before it solidifies, so as to allow manually implementing any aesthetical or artistic shapes. Furthermore, the aesthetical layer 60 is formed by a completely biodegradable material.

According to an embodiment, the aesthetical layer 60 is formed in contact with the structural layer 62, in other terms, the aesthetical layer 60 is formed and shaped onto the structural layer 62 or about the structural layer, for example, so that it remains attached or that embeds the structural layer, thus forming a partial or complete outer coating thereof.

Such shapeable material 61 and 68 comprises fibers of natural origin and a binder.

In other terms, the shapeable material 61 and 68 is a material comprising natural fiber in a binder matrix.

According to an embodiment, this material may be obtained by mixing the fibers with the binder, thus forming a soft mix, which is easy to be applied gradually onto the structural layer 62 acting as a supporting core and remaining permanently embedded within the aesthetical layer 60 or attached to the aesthetical layer 60, once the aesthetical layer 60 has solidified.

According to a possible embodiment, the fibers of natural origin are fibers containing a polysaccharide, for example vegetal cellulose, or animal or bacterial cellulose.

More in detail, the cellulosic fiber may be obtained from wood pieces that are suitably treated in order to flake them and to obtain fibers therefrom, or it may be obtained from straw, for example, corn, or barley, or rye, or spelt straw.

Alternatively, the cellulosic fiber may be obtained from coconuts or other woody fruits.

In accordance with an embodiment, the cellulosic fiber may be obtained from herbaceous plants or woody plants, alternatively, also from succulent plants, for example, from *Cactaceae,* for example, of the genus *Opuntia,* generally referred to as "prickly pear".

In case that the cellulosic fiber is formed by the woody fibers of the prickly pear paddle, the extremely advantageous effect is achieved that the same fibers are naturally braided to one another, providing free spaces that are suitable to house the binder, without the need to carry out further of weaving or intertwining operations onto the same fibers.

The cellulosic fiber may be formed by fibers of jute, or hemp, or lint, or cotton, or flax, or reed, or corn-cob silk, or rush, or wicker, or bamboo.

For example, the cellulosic fiber may be formed by shred sludge, or ramie (*Boehmeria nivea*) fiber, or starch-based vegetal pulp.

Therefore, a step may be provided for, of obtaining a cellulosic fiber starting from a wooden piece, for example by the steps of: cutting the wooden piece, flaking it mechanically, removing lignin.

According to an embodiment, the weight percentage of the cellulosic fiber in the shapeable material to form the aesthetical layer ranges between 45% and 99%, preferably above 80%. This involves the advantage to obtain a product that is very light-weight and that may be manufactured easily and inexpensively.

Such cellulose fibers are preferably obtained starting from paper sheets, selected from straw paper, packing paper, newsprint, bottling paper. Use of straw paper involves the advantage that it contains a limited amount of cellulose fibers, thus it does not retain much moisture, thus avoiding undesired swelling.

According to an embodiment, the polysaccharide fibers may comprise or be made of animal cellulose, for example, obtained from algae or tunicates.

According to another embodiment, the polysaccharide fibers may comprise or be made of bacterial cellulose, for example, obtained from *acetobacterium.*

According to still another embodiment, the polysaccharide fibers may contain or be made of chitin or chitosan, particularly obtained from shellfish.

In accordance with an embodiment, the fibers of natural origin are fibers of animal origin, particularly containing or being made of proteins or amino acids.

According to an embodiment, the above-mentioned fibers containing proteins or amino acids contain keratin, for example, they are selected from feathers, wool, mohair, cashmere.

In accordance with an embodiment, the fibers of proteins or amino acids contain fibroin or sericin, for example, they are made of fibers of silk from silkworm or spider.

In accordance with another embodiment, the fibers of proteins or amino acids contain collagen, for example, they are obtained from tendons or skins, for example of kid or lamb.

According to an embodiment, reinforcing fibers of mineral origin are added to the shapeable material (61, 68), which are selected from at least one of the following materials: carbon fiber, glass fiber, acetate-titanium fiber, metallic wire.

According to an embodiment, the binder is an aqueous-based glue, for example containing a polysaccharide, for example, a starch.

According to an embodiment, the aqueous-based glue is a natural glue, selected from:
- glue based on wheat starch;
- animal glue.
   According to an embodiment, the glue based on wheat starch is obtained by mixing wheat flour with water according to a preset ratio, and under preset thermal conditions. For example, such preset ratio is substantially of one part of flour and three parts of water. Furthermore, for example, such thermal conditions refer to a preset temperature ranging between 30° and 110° C.

According to an embodiment, the aqueous-based glue is selected from:
- vinyl glue,
- aqueous-based resin.

According to an embodiment, the binder is a nonaqueous glue, for example, an alcohol-based binder.

In accordance with an embodiment, the binder comprises a natural resin, for example, but not necessarily, selected from: vegetal mucilages, natural rubber, for example acacia gum, cherry-tree gum, balsam, Canada balsam, rosin and elemi, fossilized resin of the copal type, dammar, mastic, Venetian turpentine.

In accordance with an embodiment, the binder comprises a synthetic resin, for example selected from at least one of the following: thermosetting resin, for example polyethylene or polyvinyl chloride; melamine resin; acrylic resin, vinyl ester resin; phenolic resin, for example, bakelite; polyester resin; polyurethane resin, rubber resin, wax, acronal LeF®; resin for plastificating binders, mavisol®, biosol®, resin based on polyols or polyisocyanates, amine resin.

According to an embodiment, the binder is at least one selected from the following: cyanoacrylate glue, carbon nanotubes, glue from byssal threads of mussels, methacrylate, ceramic powder, for example mica, talc, titanium dioxide.

According to a preferred embodiment, the shapeable material 61 and 68 comprises or is formed by cellulose fibers and aqueous-based glue.

According to another preferred embodiment, the shapeable material 61 and 68 comprises or is formed by cellulose fibers and resin.

In accordance with an embodiment, the shapeable material 61, 68 is arranged in contact with the outer surface of the structural layer 62 and gradually increased with new material until obtaining the desired shape. Such shape may be a fantasy shape, allowing the frame manufacturer to give any shape to the same.

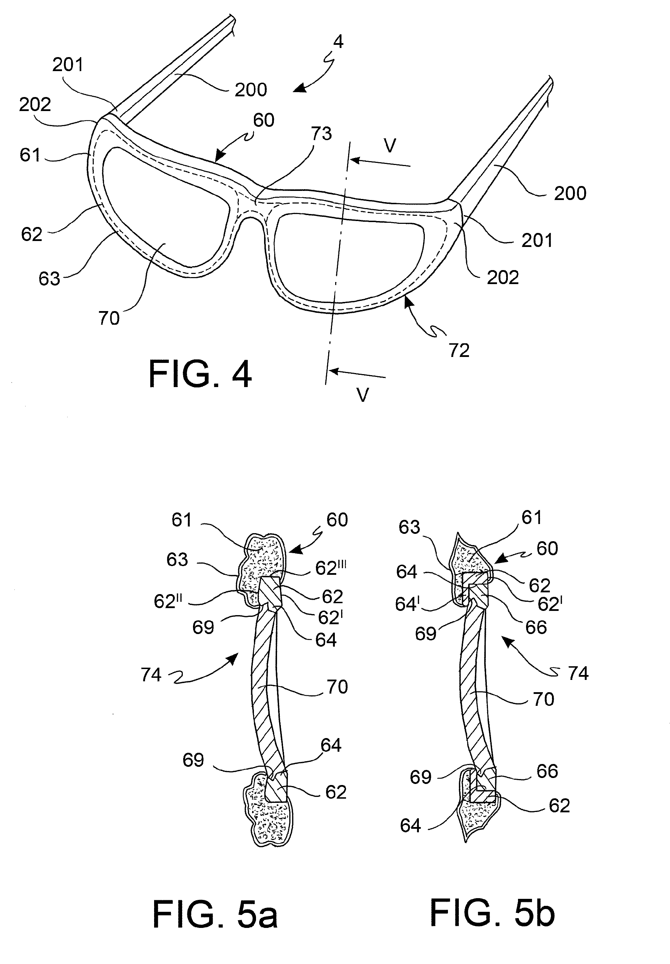

According to an embodiment, the shapeable material 61 to form the aesthetical layer 60 is in the form of a shapeable and malleable slurry formed by the cellulose fibers and the binder (Fig. 5a, 5b).

According to an embodiment, the shapeable material has such a viscosity as to be able to be injected in a mould.

In such case, the shapeable material 61 may be casted or injected into a mould containing the structural layer 62 therein, previously maufactured and located. In such case, the mould is prearranged so as to be configured to receive both the structural layer 62 and the shapeable material 61 suitable to form the aesthetical layer 60.

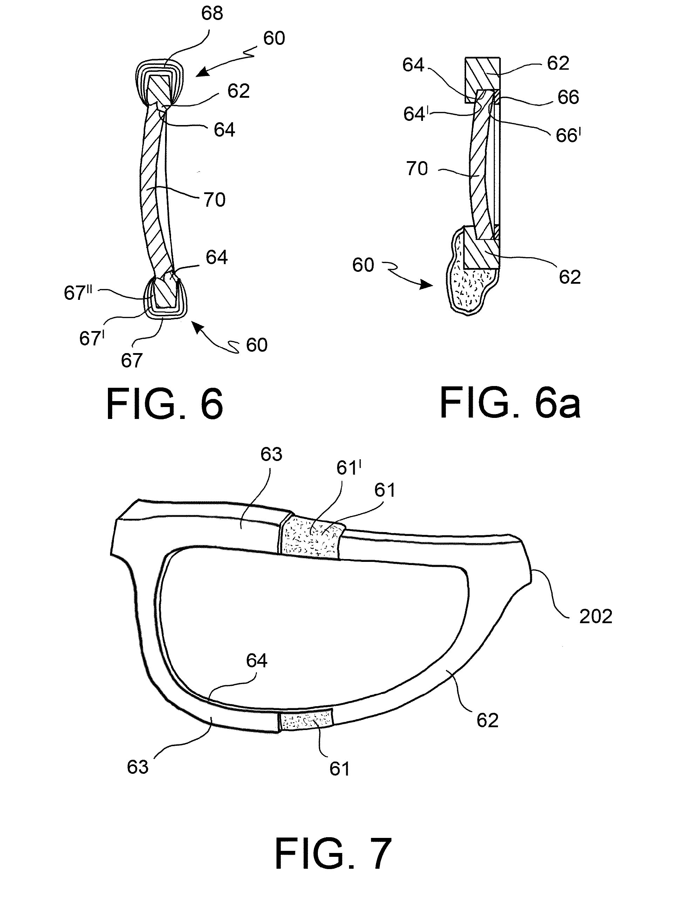

According to another embodiment, the shapeable material 68 to form the aesthetical layer 60 comprises a plurality of mutually overlapped paper sheets 67, 67', 67" previously soaked and coated with the above-mentioned binder (Fig. 6)

In accordance with an embodiment, the eyeglass frame 4 may comprise at least one further finishing paper sheet 63 glued about said aesthetical layer 60 wrapping said aesthetical layer 60 at least partially, or, for example, fully wrapping said aesthetical layer 60 and at least partially wrapping the structural layer 62.

In accordance with an embodiment, the eyeglass frame 4 may comprise a stabilizer substance suitable to prevent the formation of fungi or the early deterioration of the aesthetical layer 60.

For example, but not necessarily, such stabilizer substance is mixed to the fibers so as to remain embedded within the aesthetical layer 60.

For example, but not necessarily, such stabilizer substance comprises copper sulfate.

According to an embodiment, the shapeable material comprises a natural additive selected from at least one of the following substances:
- flax oil;
- molasses;
- glycerin;
- collagen;
- potato starch;
- gel from da cladodes;
- wheat flour;
- laponite;
- hydroxypropyl cellulose.

According to an embodiment, the frame 4 may comprise an evaporable substance suitable to be released gradually into the environment. Such substance may be, for example, embedded within the aesthetical layer 60. In accordance with an embodiment, such substance is a perfumed substance. In such case, the slow release of such substance produces to the user a pleasant freshness effect.

The above-mentioned evaporable substance, may further be, for example, a substance with a therapeutic function, particularly comprising an active ingredient that may be inhaled by the user, simply wearing the eyeglasses 4.

In other terms, a frame 4 according to the invention, comprising the substance with a therapeutic function, involves the advantage of having the double function of eyeglasses and of a drug dispenser, said dispenser being completely integrated into the frame 4 structure, thus being not visible from the outside of the frame and avoiding disturbing other people possibly present in the same environment.

According to an embodiment, the frame 4 comprises a cream or cosmetic oil in a portion of the frame suitable to get in contact with the user or wearer of the frame. In such a manner the above-mentioned cream or cosmetic oil may be spontaneously transferred from the frame to the face skin of the user or wearer skin who uses it.

For example, the frame 4 may comprise a portion of absorbing material associated to the frame in a portion of the frame operatively facing the user or wearer, so that said portion of absorbing material gets operatively in contact with the user or wearer.

According to an embodiment, said absorbing portion is made of cotton wool, for example applied in a projecting manner posteriorly from said frame 4.

For example, said absorbing portion is applied to the rear surface 62' of the structural layer 62.

In other terms, said absorbing portion allows absorbing a cream or a cosmetic oil and releasing it directly on the user's skin when the frame is worn. This produces the advantageous effect of being able to apply such cream to the user's face as long as the frame is worn in a discrete and non-invasive manner.

According to an embodiment, the eyeglass frame 4 comprises a transpiring protective layer suitable to allow the release by evaporation of said evaporable substance contained within the aesthetical layer 60.

According to an embodiment, the aesthetical layer 60 is formed on a portion of the outer surface of the structural layer 62, for example, but not necessarily, avoiding to cover the rear surface 62"' of the structural layer 62.

According to another embodiment, the aesthetical layer 60 is formed and secured only on the front surface 62" of the structural layer, avoiding to cover the rear surface 62' of the structural layer 62.

According to a further embodiment, the aesthetical layer 60 is formed and secured only to the outer side surface 62"', for example, but not necessarily, avoiding to cover the front surface 62' and the rear surface 62". The provision of avoiding covering the rear surface 62" involves the advantage of avoiding putting the aesthetical layer 60 in contact with the user's skin, to avoid an early deterioration of the aesthetical layer 60.

According to an embodiment, the structural layer 62 comprises a plurality of coupling members 78 suitable to allow the attachment of the aesthetical layer 60 onto the structural layer 62, particularly, said coupling members projecting from said structural layer 62.

For example, but not necessarily, said plurality of coupling members 78 comprises a plurality of projections alternated with a plurality of indentions.

For example, the projections are formed by pins projecting outwardly from the outer side surface 62"' and/or from the front surface 62'.

The coupling members 78 can be made in one piece with the structural layer 62 or manufactured thereon.

For example, the coupling members are manufactured in a biodegradable material, for example in wood or cardboard.

Alternatively, the plurality of coupling members 78 is formed by a plurality of surface roughnesses obtained by sanding of the surfaces of the structural layer 62.

In accordance with an embodiment, seats 64 for lenses 70 comprise a first and a second seat 64 manufactured in the structural layer 62.

The seats 64 comprise holding means 74 suitable to operatively hold lenses 70 in place.

According to an embodiment, the holding means 74 comprise a grooved or relief profile 69, couplable by shape coupling to an edge of a lens 70.

Such grooved or relief profile 69, may, for example, but not necessarily, be obtained directly in said seats 64 (Fig. 5a).

According to another embodiment, the holding means 74 comprise respective mounting rings 66 securable in said seats 64 and having an abutting surface 66' suitable to hold a respective lens 70 (Fig. 6a).

The seats 64 for lenses may comprise a retaining edge 64' arranged as an extension of the structural layer 62 inwardly of the seat, and defined by the front surface 62" of the structural layer 62.

According to another embodiment, the holding means 74 comprise respective mounting rings 66 securable in said seats 64 and comprising the above-mentioned grooved or relief profile 69. The grooved or relief profile 69 is obtained on a radially inner surface of the mounting rings 66.

According to an embodiment, the mounting rings 66 are configured to elastically hold the lenses therein.

The mounting rings 66 can be secured to the respective seats 64 by glueing or joining.

According to an embodiment, the mounting rings 66 are obtained in a biodegradable material, for example, wood or cardboard.

Such provision allows easily separating the lenses from the frame at end of life of the same frame, obtaining a completely biodegradable waste composed of the whole frame, and a completely recyclable waste, composed of the lenses.

According to a possible embodiment, the above-mentioned objects and advantages are met by an eyeglass frame (4) formed by an aesthetical layer (60) having at least one seat for a respective lens, defined by a rear surface 62' suitable to face a user and an opposite front surface 62", an outer side surface 62"' joining said front surface 62" and said rear surface 62' wherein said aesthetical layer 60 comprises a shapeable material 61, 68 comprising cellulose fibers and a binder.

In other terms, according to an embodiment, such frame avoids comprising a support layer and it is formed only by the aesthetical layer.

In accordance with an embodiment, the frame 4 comprises two opposite side ends 202 and two attaching temple bars 200 having a first end 201 movably connected to one of the side ends 202 of the frame 4 and another end suitable to be engaged to an user.

The frame 4 may comprise mobile connecting means between the first end 201 of each temple bar and one of said side ends 202 of the frame 4, wherein such connecting means are, for example, snap means.

Such snap connecting means may comprise a protrusion, for example having a substantially spherical shape, suitable to engage by shape fitting with a respective seat, wherein the protrusion is integral to one of said side end 202 of the frame 4 and said end 201 of the temple bar, and the seat is obtained in the other one of said side end 202 of the frame 4 and said end 201 of the temple bar.

According to an embodiment, the protrusion and the seat are couplable by elastic deformation. This characteristic involves the advantage of allowing an easy and fast assembling and disassembling of the temple bars from the frame.

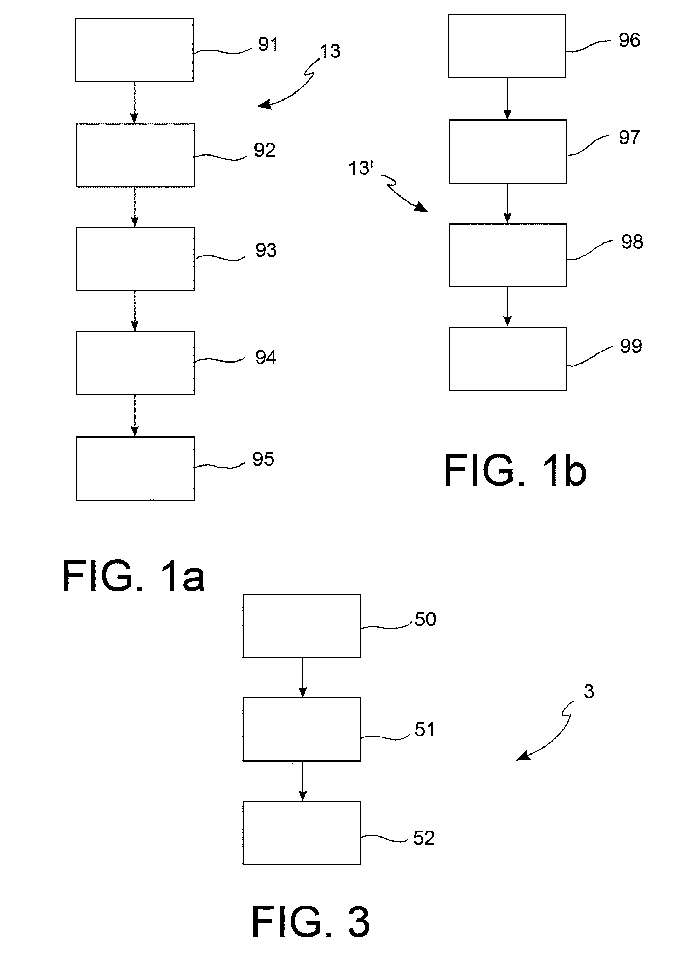

According to another aspect of the present invention, the above-mentioned objects and advantages are obtained by a method 1 for manufacturing an eyeglass frame 4 comprising the steps of providing 10 a support structural layer 62 having seats 64 for respective lenses 70, applying 13 an aesthetical layer 60 on at least one portion of said structural layer 62 (Fig. 1).

The step of applying 13 the aesthetical layer 60 comprises the steps of providing 33 a shapeable material 61, 68 comprising cellulose fibers and aqueous-based glue, which can be solidified by drying, a step of shaping 14 said shapeable material 61, 68 directly on said structural layer 62 to form said aesthetical layer 60 until obtaining a desired shape and dimensions; drying 15 said aesthetical layer 60 formed on said structural layer 62.

According to an embodiment, the step of providing 33 a shapeable material 61 comprises a further step of manufacturing 2 said shapeable material 61, comprising the further steps of providing 40 a plurality of paper sheets, soaking 42 said paper sheets in water for a preset time and under preset in thermal conditions to macerate them 43, removing 44 the excess water, then draining the so-obtained material, and whipping or chopping 45 said paper sheets, thus obtaining a cellulose fiber slurry, mixing 46 said slurry with said aqueous-based glue, obtaining said shapeable material 61.

In other terms, such method provides for manufacturing the shapeable material starting from a paper waste, for example, by maceration in water of such waste paper for disaggregating the paper structure and obtaining a paper fiber slurry, particularly, cellulose fibers.

In order to promote the production of the shapeable material, a crumbling step (41) may be provided of the paper sheets before soaking them in water.

According to an embodiment, the above-mentioned thermal conditions comprise a temperature of the water into which the paper sheets are soaked, having a value ranging between 8° C and 40° C, preferably between 15° C and 25° C.

According to an embodiment, the above-mentioned preset time ranges between 2 and 5 hours, preferably between 3 and 4 hours.

In accordance with an embodiment, a further step of boiling (47) the water containing the paper sheets may be provided for, to promote the disintegration of the paper to form the cellulose fibers, said boiling being carried out for a preset time period, for example, but not necessarily, ranging between 10 minutes and 1 hour, preferably ranging between 15 and 25 minutes.

The step of removing 44 the excess water, may be obtained by pouring the water together with the paper, in a container having a bottom with narrow passages, so as to allow the passing through by gravity only of water and not of the disaggregated paper.

The step of whipping or chopping 45 the paper sheets allows disintegrating the paper sheets as treated above so as to obtaining the cellulose fibers.

According to an embodiment, the method 1 comprises a step of manufacturing 3 said aqueous-based glue.

According to an embodiment, the aqueous-based glue is a natural glue, selected from:
- glue comprising wheat starch;
- animal glue.

According to an embodiment, the glue comprising wheat starch is obtained by mixing 50 wheat flour, for example wheat, for example "type 00" wheat, with water, according to a preset ratio and under preset thermal conditions. For example, such preset ratio is substantially of one part of flour and three parts of water. Furthermore, for example, the preset thermal conditions are given by temperatures ranging between 30° and 110° C.

According to an embodiment, the water and wheat flour suspension is heated 51 and/or brought to boil.

According to an embodiment, the method comprises a step of bringing to boil 51 said suspension for a preset time, for example ranging between 2 and 10 minutes.

According to an embodiment, said step of manufacturing the glue comprising wheat starch, may comprise a step of adding 52 an amount of a stabilizer substance against fungal growth, for example comprising copper sulfate.

According to another embodiment, the step of applying (13) the aesthetical layer 60 on at least one portion of said structural layer 62, comprises the following steps:
- providing 91 a mould having a cavity shaped according to the shape to be imparted on the aesthetical layer 60;
- providing 92, in said cavity, seats to house a support structural layer 62 previously manufactured;
- pouring 93 the shapeable material 61 into said cavity so that comes in contact with the structural layer 62 and fills the cavity;
- drying 94 the aesthetical layer 60 together with the structural layer 62;
- pulling out 95 the assembly of structural layer 62 and aesthetical layer 60, of the eyeglass frame.

According to the embodiments explained above, the present method allows obtaining a pasty and fibrous shapeable material, which is easily manually malleable according to any fantasy shape (Figs. 5a, 5b, 6a, 7).

According to another embodiment of the present method, the step of shaping 14 the shapeable material (68) directly onto the structural layer 62 to form said aesthetical layer 60, comprises the steps of overlapping to such structural layer 62, a first paper sheet 67 pre-wet and covered with said glue, and overlapping onto said primo sheet 67 a plurality of further paper sheets 67', 67" in succession, pre-wet and covered with said glue, until obtaining preset shape and dimensions of said aesthetical layer 60.

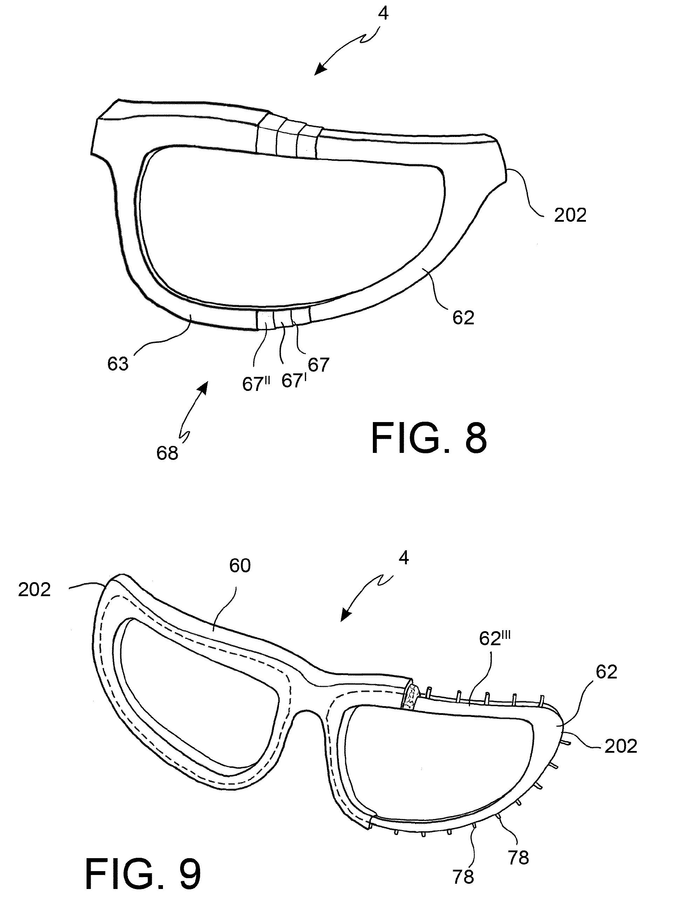

Such step of overlapping a plurality of sheets 67', 67", may for example, be carried out by overlapping such plurality of further sheets transversally the ones to the other ones (Figs. 6, 8).

According to a possible embodiment, the step of shaping 14 the shapeable material 68 directly onto the structural layer 62 to form said aesthetical layer 60 comprises the steps of overlapping to such structural layer 62 a first sheet made of cellulose fibers 67 pre-wet with alcohol and coated with said binder, and of overlapping to said first sheet 67 a plurality of further sheets of cellulose fibers 67', 67" in succession, which are pre-wet with alcohol and coated with said binder until obtaining preset shape and dimensions of said aesthetical layer 60.

In accordance with an embodiment, the step of providing 10 a structural layer 62 comprises a step of implementing 11 said support structural layer 62 with a biodegradable material.

For example, such method comprises a step of implementing 11 said structural layer in wood or plywood. Alternatively, it may be obtained in cardboard, or other biodegradable materials. For example, the structural layer may further be obtained starting from a piece of solid wood, by a shaving removal operation to form the seats and the outer surfaces of the structural layer 62.

According to an embodiment, the method comprises a step of implementing a plurality of coupling members 78 projecting or indenting from said structural layer 62, suitable to allow the attachment of the aesthetical layer 60 onto the structural layer 62. The method for manufacturing an eyeglass frame may comprise a finishing step 18, obtained by wrapping at least one finishing paper sheet 63, wet with water and coated with glue, about said aesthetical layer 60.

In accordance with an embodiment, the production method comprises a step of inner and/or surface treatment of said aesthetical layer by a stabilizer substance.

The method, may further comprise an impregnation step (17) of said aesthetical layer (60) and/or said structural layer with an evaporable substance, so that such substance may be gradually released into the environment.

Such substance, for example, is at least one selected from a perfumed substance; a substance with a therapeutic function.

The method for manufacturing an eyeglass frame, according to an embodiment comprises a finishing step 19 of the frame, after the curing of the aesthetical layer by drying.

According to an embodiment, the finishing step 19 may comprise a flaming step, obtained by temporarily exposing the frame to a flame. Such a step slightly burns the free ends of the paper layers applied onto the structural layer 62 and forming the aesthetical layer 60, imparting a particular aesthetic effect.

The finishing step (19), may further comprise a surface incision step of the solidified aesthetical layer 60, by using red-hot metal instrument shaping the outer surface of the aesthetical layer and imparting plasticity.

In accordance with an embodiment, the production method comprises a coating step 16 of said aesthetical layer by a transpiring protective layer suitable to allow the release by evaporation of said evaporable substance.

For example, a painting step of the frame 4 may be provided for, with a natural substance suitable to release a protective layer, for example, but not necessarily, a waterproof layer.

The above-mentioned natural substance is selected, for example, but not necessarily, from:
- "Bologna gypsum";
- rabbit skin glue.

A further step of providing, in a rear portion of the frame, an absorbing portion suitable to absorb a cream or a cosmetic oil may be provided for.

In such a manner, this portion is capable of continuously transferring the cream or the aesthetic olio directly to the eye outline of the user or wearer. An effect of this characteristic is the possibility to carry out a continuous aesthetic treatment without affecting the user's normal daily operations.

According to another aspect of the present invention, the above-mentioned objects and advantages are met by a method 13' for manufacturing an eyeglass frame 4, wherein the frame comprises an aesthetical layer 60 having an outer surface 61' and seats 64 suitable to house respective lenses 70.

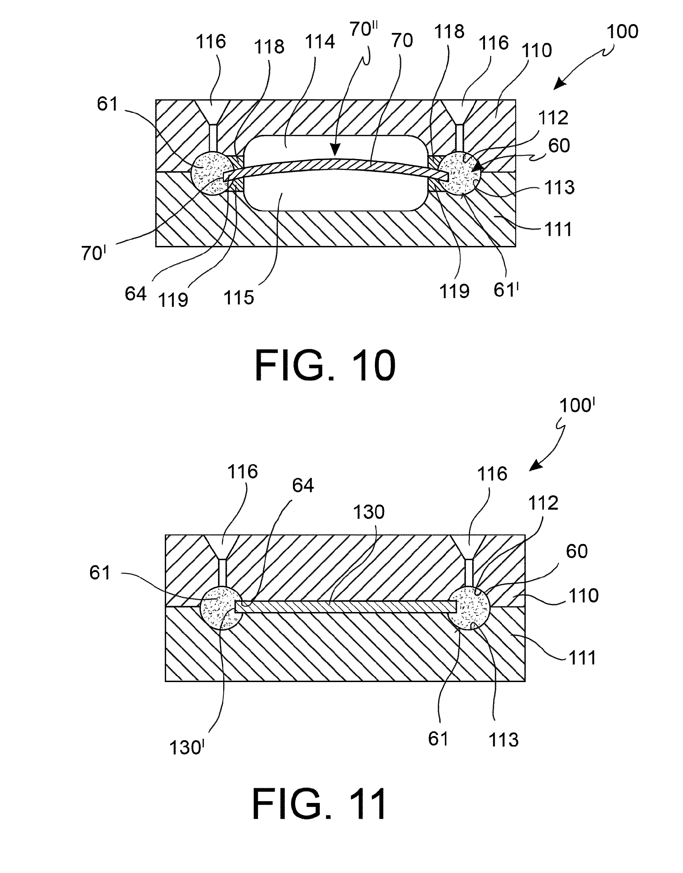

Such method comprises the steps of providing 96 a mould 100 having a cavity 112, 113 conformed in a complementary manner to said outer surface 61'. Such a mould 100 is, for example shown in Figs. 10 and 11.

The method further comprises a step of providing 97 a shapeable material 61, having the characteristics of the shapeable material 61 already described above, and comprising cellulose fibers and aqueous-based glue.

Once the deformable material has been prepared, in the form of a liquid comprising the cellulose fibers and the aqueous-based glue, the above-mentioned method provides for a step of casting 98 such shapeable material 61 into the cavity 112, 113 to form the aesthetical layer 60.

After casting the deformable material into the cavity, according to the above-mentioned method, a step of drying (99) the aesthetical layer 60 and withdrawing the aesthetical layer 60 from said mould 100 is provided for.

According to an embodiment of the above-mentioned method, a step of providing and positioning eyeglass lenses 70 directly in said mould 100 is provided for, before carrying out the casting step, so that the shapeable material 61 wraps an end edge 70' of each lens 70 and that each said lens 70 remains partially embedded in the aesthetical layer 60.

According to an alternative embodiment, the method comprising a step of providing and positioning, in said mould 100, at least one removable insert 130 suitable to form said seats 64 for lenses.

According to a further possible embodiment, the above-mentioned method comprises a step of providing a structural layer 62, for example comprising said seats 64 for lenses, and arranging said structural layer 62 within said mould 100 leaving a space between the cavity 112, 113 and said structural layer 62, wherein such space is conformed to house the shapeable material 61.

Figs. 10 and 11 respectively show a mould 100 for implementing an eyeglass frame 4 comprising only the aesthetical layer 60, wherein such aesthetical layer 60 is formed directly surrounding and embedding the lens peripheral edge 70', while the mould 100' of Fig. 11 is conformed to receive an insert 130 to form a seat 64 for the lens 70. In such case, after the drying step, thus after the solidification of the aesthetical layer, such insert 130 is removed from the frame by elastic deformation thereof, and replaced with a lens. The insertion of the lens in place of the insert also occurs by elastic deformation of the frame.

According to a further aspect of the invention, the mould 100 comprises a lower half-mould 111 and an upper half-mould 112 mutually couplable forming the cavity 112, 113. The half-moulds 111 and 112 are configured so as to allow sandwiching a lens therebetween when they are coupled, so that said lens is held in place therebetween, and particularly in the final position with respect to the aesthetical layer 60 and therefore to the frame.

According to an embodiment, each of the half-moulds 111 and 112 comprises, in the face facing the other half-mould, a respective concavity 114 and 115 so as to avoid the contact of a central portion of the lens 70 and the half-moulds when the half-moulds are closed and contain the lens.

According to an embodiment, the upper half-mould 110 comprises a channeling system 116 connecting an upper outer surface of the upper half-mould with the cavity.

According to an embodiment, both the upper half-mould 110 and the lower half-mould 111 comprise an elastically deformable gasket ring 118 and 119, configured so as to follow the edge of the lens 70 and internally define the frame 4, for example, the aesthetical layer 60. Such elastic gasket ring 118 and 119 comprises a surface suitable to be arranged operatively in contact with the lens 70 and seal with the lens to prevent the passage of the shapeable material towards a central portion 70" of the lens 70. In fact, such central zone 70" has not to, be reached by the shapeable material, in order to obtain an almost complete eyeglasses, upon opening the mould.

The lower gasket ring 119 and the upper gasket ring 118 are configured so as to hold operatively the lens therebetween by elastically compressing it. For example, but not necessarily, the gasket rings 118 and 119 have a shape substantially mutually equal.

The gasket rings 118 and 119 involve the advantage to allow the positioning, within the mould, of lenses with different thicknesses and shapes, corresponding to different graduations. In other terms, a mould 100 as that of Fig. 10 allows implementing eyeglasses with lenses with different graduations, leading to a universal mould.

According to another aspect of the invention, the above-mentioned objects and advantages are obtained by a method for manufacturing an eyeglass frame 4 or for manufacturing eyeglasses having said frame, said frame 4 comprising an aesthetical layer 60 having an outer surface 61' and seats 64 suitable to house respective lenses 70, said method comprising a step of laying at least one layer of a shapeable pasty material 61 comprising fibers of natural origin and a binder forming a shapeable panel, which can be solidified after being shaped.

In accordance with an embodiment, the method comprises a step of pressing a cavity defining a shaped tridimensional surface corresponding to the shape of the outer surface 61' of the aesthetical layer 60 to be obtained, against said shapeable panel and against said operative surface, shaping said aesthetical layer 60.

In accordance with an embodiment, the method comprises a step of removing said aesthetical layer from said operative surface when it is still shapeable, and transferring it onto a second operative surface having a tridimensional shape, for example, curve, for example, cylindrical or at least partially spherical, so that it may solidify thus taking the shape of such second surface.

According to still another aspect of the present invention, the above-mentioned objects and advantages are obtained by a method for manufacturing eyeglasses having an eyeglass frame and two lenses, said frame comprising an aesthetical layer with a structural function, comprising cellulose fibers and a binder, said method comprising a step of arranging said lenses in a relative position and at a relative distance that correspond to their final relative position and distance in said aesthetical layer, or mutually connecting said lenses by a support bridge, so that they take a relative position and distance that correspond to their final relative position and distance in said aesthetical layer.

According to an embodiment, this method comprises a step of shaping a shapeable material comprising said cellulose fibers and said binder, directly on a peripheral edge of said lenses held in said relative position and distance, gradually increasing said shapeable material until obtaining a preset or desired shape of said aesthetical layer of said frame or said eyeglasses.

The method further comprises a further step of solidifying said aesthetical layer so that it reaches a desired mechanical strength.

The embodiments described above of the present invention involve the following important advantages.

The provision of implementing an aesthetical layer with a material comprising cellulose fibers, or paper, and an aqueous-based natural glue involves the advantage of implementing a very light-weight and very porous structure, thereby forming a large plurality of hollow inner interspaces suitable to house a volatile substance that will be able to be gradually released into the environment.

The provision of the presence of fibers imparts to the aesthetical layer an elastic and strong structure, avoiding that it is fragile.

The provision that the paper or cellulose fibers are obtained starting from a paper waste involves the further advantage that it is an environmental-friendly product, since it subtracts wastes to the same environment.

The provision that the structural layer is also fully in a biodegradable material involves the further advantage that the whole frame structure is biodegradable and thus compatible with the environment.

The shapeable material of which the aesthetical layer is formed, according to an embodiment, is in a pasty form, thus it allows being shaped according to any shape, giving to the manufacturer or the artist the highest degree of freedom upon implementing any shape.

Still another advantage of the present invention is the easiness in separating the components, with the aim of a disposal thereof as a waste, since it allows easily separating the recyclable portion, composed of the lenses, the remaining being the biodegradable portion.

A further advantage provided by the present invention is given by the fact that such an eyeglass frame is very light-weight.

The provision of a material made of cellulose fibers and aqueous-based glue allows the advantage of obtaining a porous structure of the aesthetical layer 60, which gives the advantage that such frame or eyeglasses is floatable when it drops into a liquid, for example, water. This gives the further advantage to be able to easily retrieve the eyeglasses when they accidentally drop into water.

Another advantage provided by the present invention is to provide an eyeglass frame having a cosmetic purpose, thus being able to apply continuously a cosmetic substance on the user's face skin, for example in the area of the eye outline.

A further advantage provided by the present invention is to provide a frame substantially made of polysaccharides, i.e., completely natural, biodegradable, biocompatible materials. For example, if the support layer is in wood and the aesthetical layer is in paper fiber bound with a starch, all these three components are polysaccharides.

To the preferred implementation solution described above of the device, those of ordinary skill in the art, with the aim of meeting contingent, specific needs, will be able to make a number of modifications, adaptations, and replacements of elements with functionally equivalent other ones, without however departing from the scope of the following claims.

## Claims

1. A method for manufacturing an eyeglass frame (4), comprising the steps of:
- providing (10) a structural layer (62) having seats (64) suitable to house respective lenses (70);
- applying (13) an aesthetical layer (60) on at least one portion of said structural layer (62);
**characterized in that** said applying step (13) comprises the steps of:
- providing (33) a shapeable material (61, 68) comprising cellulose fibers and a binder, which can be solidified after being shaped;
- shaping (14) said shapeable material (61, 68) directly onto said structural layer (62) to form said aesthetical layer (60) until obtaining a preset tridimensional shape of said aesthetical layer;
- solidifying (15) said aesthetical layer (60) formed onto said structural layer (62).

2. The method according to claim 1, wherein said binder is an aqueous-based glue, which can be solidified by drying, and said solidifying step is replaced by a step of drying said aesthetical layer (60) formed onto said structural layer (62).

3. The method according to claim 1 or 2, wherein said cellulose fibers are selected from fibers containing at least one of the following polysaccharides:
- vegetal cellulose;
- animal or bacterial cellulose;
wherein said vegetal cellulose fibers are selected from at least one of the following:
- wood fibers;
- straw;
- fibers from woody plants;
- fibers from herbaceous plants;
- fibers obtained by crushing or maceration of paper or paper sheets, and/or wherein said aesthetical layer comprises fibers formed by at least one of the following amino acids:
- keratin;
- fibroin or sericin;
- collagen.

4. The method according to claim 1, wherein said binder is selected from at least one of the following:
- an aqueous-based glue;
- a natural resin;
- a synthetic resin.

5. The method according to claim 1, wherein said step of shaping (14) said shapeable material (68) directly on said structural layer (62), comprises the steps of:
- overlapping to said structural layer (62) a first sheet (67) containing said cellulose fibers coated with said binder;
- overlapping to said first sheet (67) a plurality of further sheets containing said cellulose fibers(67', 67") in succession, previously coated with said binder until obtaining preset shape and dimensions of said aesthetical layer (60).

6. The method according to claim 1, wherein the structural layer (62) comprises a biodegradable material.

7. The method according to any of the preceding claims, comprising a finishing step (18) obtained by wrapping at least one finishing paper sheet (63), wet with water and/or coated with said binder, about said aesthetical layer (60).

8. The method according to at least one of the preceding claims, comprising a step of soaking (17) said aesthetical layer (60) and/or said structural layer (62) with an evaporable substance comprising a perfumed substance or a substance with a therapeutic function.

9. A method for manufacturing an eyeglass frame (4) or manufacturing eyeglasses having said frame, said frame (4) comprising an aesthetical layer (60) having an outer surface (61') and seats (64) suitable to house respective lenses (70), said method comprising the steps of:
- providing (96) a mould (100, 100') having a cavity (112, 113) conformed in a complementary manner to said outer surface (61');
- providing (97) a shapeable pasty material (61) comprising cellulose fibers and a binder, which can be solidified after being shaped;
- casting or injecting (98) said shapeable material (61) into said cavity (112, 113) to form said aesthetical layer (60);
- solidifying (99) said aesthetical layer (60) and pulling out said aesthetical layer (60) from said mould (100).

10. The method according to claim 9, comprising a step of providing and positioning lenses (70) for eyeglasses in said mould (100), before carrying out the casting step, so that the shapeable material (61) wraps an end edge (70') of each lens (70) and that said each lens (70) remains partially embedded in said aesthetical layer (60).

11. The method according to claim 9 or 10, comprising the further steps of:
- providing a structural layer (62);
- arranging said structural layer (62) within said mould (100) leaving a space between the cavity (112, 113) and said structural layer (62), said space being suitable to house said shapeable material (61).

12. The method for manufacturing an eyeglass frame (4) or manufacturing eyeglasses having said frame, said frame (4) comprising an aesthetical layer (60) having an outer surface (61') and seats (64) suitable to house respective lenses (70), said method comprising the steps of:
- laying at least one layer of shapeable material (61) comprising cellulose fibers and a binder forming a shapeable panel, which can be solidified after being shaped;
- shaping said aesthetical layer (60) by pressing a cavity defining a shaped tridimensional surface corresponding to the shape of the outer surface (61') of the aesthetical layer (60) to be obtained, against said shapeable panel and against said operative surface, by shaping said aesthetical layer (60);
- solidifying said aesthetical layer.

13. An eyeglass frame (4) comprising:
- a support structural layer (62) having seats (64) for respective lenses (70);
- an aesthetical layer (60) applied on at least one portion of said structural layer (62),
**characterized in that** said aesthetical layer (60) comprises:
- a shapeable material (61, 68) comprising cellulose fibers and a binder, shaped directly on said structural layer (62) according to a tridimensional shape, which can be solidified after being shaped.

14. The eyeglass frame according to claim 13, wherein said structural layer (62) comprises a plurality of coupling members (78) suitable to allow the attachment of the aesthetical layer (60) onto the structural layer (62).

15. An eyeglasses comprising:
- a frame (4);
- lenses mounted in each seat (64) for lenses of said frame (4);
- said frame being produced by a method according to at least one of the claims 1 to 12.
